# EUROPÄISCHE PATENTSCHRIFT

(11) **EP 3 608 643 B1**
(45) Veröffentlichungstag und Bekanntmachung des Hinweises auf die Patenterteilung: **06.12.2023**
(21) Anmeldenummer: 18188322.4
(22) Anmeldetag: 09.08.2018
(51) Int. Cl.: G01K 1/08, G05D 23/19

(54) **ELEKTRONISCHER RAUMTEMPERATURREGLER**
ELECTRONIC ROOM TEMPERATURE REGULATOR
THERMOSTAT D'AMBIANCE ÉLECTRONIQUE

(43) Veröffentlichungstag der Anmeldung: 12.02.2020
(73) Patentinhaber: Stuhl Regelsysteme GmbH, 91174 Spalt (DE)
(72) Erfinder: Miehling, Georg, 91785 Pleinfeld (DE); Frey, Andreas, 91710 Gunzenhausen (DE); Roßbacher, Gerolf, 91166 Georgensgmünd (DE); Thümlein, Sven, 91126 Schwabach (DE)
(74) Vertreter: terpatent Patentanwälte ter Smitten Eberlein-Van Hoof Rütten Daubert

(56) Entgegenhaltungen:
- WO-A1-99/60354
- US-A- 5 485 954

## Beschreibung

Die Erfindung betrifft einen elektronischen Raumtemperaturregler zur Montage in einer wandseitigen standardisierten Gerätedose, insbesondere in einer standardisierten Unterputz-Gerätedose.

Elektronische Raumtemperaturregler werden mit Netz-Wechselspannung betrieben und werden in Gebäuden zur Steuerung eines elektrischen Stellglieds, beispielweise ein elektrisches Fluidventil einer Fußbodenheizung oder ein elektrisches Klimagerät, verwendet, um die Temperatur in einem Raum zu regulieren. Der Raumtemperaturregler weist einen elektrischen Temperaturfühler auf, über den die Raumtemperatur erfassbar ist. Ferner weist der Raumtemperaturregler eine Elektronikeinheit auf, die abhängig von der erfassten Ist-Raumtemperatur die Netz-Wechselspannung zu dem Stellglied durchschaltet oder das Stellglied von der Netz-Wechselspannung trennt, um hierdurch eine über ein Bedienelement vordefinierte Soll-Raumtemperatur einzustellen.

Für die Netz-Wechselspannungs-Elektroinstallation sind in Gebäuden typischerweise standardisierte Gerätedosen vorgesehen, die im Allgemeinen in den Gebäudewänden angeordnet sind und eine einfache Installation der Gebäudeelektrik ermöglichen. Da die Ästhetik in der Gebäudetechnik eine entscheidende Rolle spielt, bieten Gebäudetechnik-Hersteller typischerweise modulare Systeme an, die auf einfache Weise an verschiedene Design-Programme, auch als "Schalterprogramme" bezeichnet, anpassbar sind. Raumtemperaturregler zur Montage in standardisierten Gerätedose weisen typischerweise eine einheitliche funktionale Elektronikbaugruppe auf, die in der Gerätedose angeordnet und an der Gerätedose befestigt wird, und weisen auf der Sichtseite eine Design-Abdeckblende auf, die an der Elektronikbaugruppe befestigbar und von der Elektronikbaugruppe abnehmbar ist. Da die Abdeckblende im Allgemeinen ohne die Verwendung eines Werkzeugs von der Elektronikbaugruppe abnehmbar ist, darf die Elektronikbaugruppe aus Sicherheitsgründen auf der Vorderseite keine stromführenden Elemente aufweisen. Aus diesem Grund ist der elektrische Temperaturfühler bei derartigen Raumtemperaturreglern innerhalb des Elektronikgehäuses angeordnet.

Um dennoch eine relativ genaue Messung der Raumtemperatur zu ermöglichen, weist die Abdeckblende und/oder das Elektronikgehäuse typischerweise Lufteinlässe auf, über die Raumluft durch die Abdeckblende und/oder das Elektronikgehäuse in Richtung des Temperaturfühlers strömen kann. Der Raumtemperaturregler weist im Allgemeinen an zwei gegenüberliegenden Seiten Lufteinlässe auf, um einen relativ hohen Raumluft-Volumenstrom durch den Raumtemperaturregler in Richtung des Temperaturfühlers zu ermöglichen. Auf Grund der seitlichen Lufteinlässe ragen die Abdeckblenden und/oder das Elektronikgehäuse derartiger Raumtemperaturregler typischerweise relativ weit aus der Wand heraus, wodurch sie optisch in den Vordergrund treten und somit die Raumoptik beeinträchtigen.

Aus der WO 99/60354 A1 ist ferner eine Sensoreinheit mit einem Temperaturfühler bekannt, der durch eine Öffnung auf der Vorderseite des Elektronikgehäuses aus diesem herausragt und in eine korrespondierend ausgebildete Aufnahme einer an der Vorderseite des Elektronikgehäuses angebrachten Abdeckblende eintaucht. In der Abdeckblende sind Lufteinlässe vorhanden, über die Raumluft zu dem Temperaturfühler strömen kann. Der Temperaturfühler wird mit einer für Menschen unkritischen Versorgungsspannung von < 5 V betrieben, die von einem entsprechend ausgebildeten Netzteil bereitgestellt wird. Für ein derartiges Netzteil ist jedoch ein relativ großer Bauraum innerhalb des Elektronikgehäuses erforderlich.

Es stellt sich daher die Aufgabe, einen relativ flachen Raumtemperaturregler zur Montage in einer wandseitigen standardisierten Gerätedose zu schaffen, der eine exakte Raumtemperaturerfassung ermöglicht.

Diese Aufgabe wird durch einen Raumtemperaturregler zur Montage in einer wandseitigen standardisierten Gerätedose mit den Merkmalen des Hauptanspruchs 1 gelöst.

Der erfindungsgemäße Raumtemperaturregler weist eine Elektronikbaugruppe auf, die in der Gerätedose anordenbar und in der Gerätedose befestigbar ist. Die Elektronikbaugruppe umfasst ein Elektronik-Gehäuse und eine Elektronikeinheit, die in dem Elektronik-Gehäuse angeordnet ist. Das Elektronik-Gehäuse besteht aus einem elektrisch isolierenden Kunststoff um den Bediener des Raumtemperaturreglers vor der Netz-Wechselspannung zu schützen. Das Elektronik-Gehäuse ist derart ausgebildet, dass es im montierten Zustand zu einem großen Teil, mindestens jedoch zu Hälfte, in die Gerätedose eintaucht. An dem Elektronik-Gehäuse ist eine Befestigungsvorrichtung angeordnet, über die die Elektronikbaugruppe an der standardisierten Gerätedose befestigbar ist.

Die Elektronikeinheit ist im Allgemeinen auf einer Elektronik-Platine angeordnet, die in dem Elektronik-Gehäuse befestigt ist. Die Elektronikeinheit weist typischerweise einen Mikrocontroller auf und kann ferner mehrere Halbleiterschalter aufweisen, vorzugsweise mit Leistungshalbleitern, um die Netz-Wechselspannung zu schalten.

Der erfindungsgemäße Raumtemperaturregler umfasst ferner eine Abdeckblende, die an der Elektronikbaugruppe befestigbar und von der Elektronikbaugruppe abnehmbar ist. Vorzugweise ist die Abdeckblende nicht mit der Elektronikbaugruppe verschraubt, sodass auf der Außenseite des Raumtemperaturreglers keine Schrauben vorhanden sind, die den optischen Eindruck beeinträchtigen. Die Abdeckblende ist daher im Allgemeinen ohne die Verwendung von Werkzeug abnehmbar und befestigbar. An der Abdeckblende ist ein Bedienelement vorgesehen, über das eine Soll-Raumtemperatur einstellbar ist. Das Bedienelement kann beispielsweise ein einfaches mechanisches Stellelement sein, das mechanisch mit der Elektronikeinheit verbunden ist, oder kann ein elektronisches Bedienelement mit elektrischen Tastern sein, das elektrisch mit der Elektronikeinheit verbunden ist und beispielsweise auch ein Display aufweisen kann.

Der erfindungsgemäße Raumtemperaturregler umfasst ferner einen elektrischen Temperaturfühler, der elektrisch mit der Elektronikeinheit verbunden ist, um eine Ist-Raumtemperatur zu erfassen. Der Temperaturfühler kann beispielsweise ein einfaches PTC-Element sein, das rein elektrisch mit der Elektronikeinheit verbunden ist. Alternativ kann der Temperaturfühler auch durch einen integrierten Schaltkreis mit einer integrierten Auswerteeinheit gebildet sein, der signaltechnisch mit der Elektronikeinheit verbunden ist und ein Datensignal übermittelt.

Erfindungsgemäß weist die Elektronikbaugruppe einen domartigen von der Vorderseite des Elektronik-Gehäuses hervorstehenden Sensordom auf, in dem der Temperaturfühler angeordnet ist. Der Sensordom besteht wie das Elektronik-Gehäuse aus einem elektrisch isolierenden Kunststoff. Der Sensordom kann integral mit dem Elektronik-Gehäuse ausgebildet sein, kann aber auch als separates Element ausgebildet sein, das an dem Elektronikgehäuse befestigt ist. In einer einfachen Ausführungsform weist der Sensordom eine im Wesentlichen rechteckige Sensordom-Vorderseite auf. Die im montierten Zustand von außen sichtbare Sensordom-Vorderseite kann, insbesondere aus ästhetischen Gründen, auch eine andere Form aufweisen.

Ferner weist die Abdeckblende erfindungsgemäß eine zu dem Sensordom korrespondiere Sensordom-Öffnung auf, in die der Sensordom im montierten Zustand des Raumtemperaturreglers eintaucht, sodass mindestens eine Sensordom-Frontwand unmittelbar von der Raumluft angeströmt wird. Der Temperaturfühler des Raumtemperaturreglers ist erfindungsgemäß in dem Sensordom angeordnet und thermisch mit der angeströmten Sensordom-Frontwand verbunden. Vorzugsweise liegt der Temperaturfühler unmittelbar an der Sensordom-Frontwand an um eine besonders gute thermische Verbindung zu schaffen. Alternativ kann der Temperaturfühler auch beispielsweise über eine konventionelle Wärmeleitpaste thermisch mit der Sensordom-Frontwand verbunden sein. Dadurch, dass der Temperaturfühler thermisch mit der von der Raumluft angeströmten Sensordom-Frontwand verbunden ist, wird eine exakte und verzögerungsarme Raumtemperaturerfassung ermöglicht. Da die Sensordom-Frontwand direkt von der Raumluft angeströmt wird, sind in der Abdeckblende oder dem Elektronik-Gehäuse keine seitlichen Lufteinlässe vorhanden, sodass der erfindungsgemäße Raumtemperaturregler relativ flach ausgebildet ist.

Erfindungsoemäß ist in dem Sensordom eine Sensorplatine angeordnet, die elektrisch mit der Elektronikeinheit verbunden ist und auf der der Temperaturfühler angeordnet ist. Die Sensorplatine mit dem Temperaturfühler kann auf einfache Weise in dem Sensordom befestigt und elektrisch mit der Elektronikeinheit verbunden werden. Ferner kann auf der Sensorplatine auch ein Teil der Elektronikeinheit angeordnet werden, beispielsweise eine Auswerteeinheit, die ein Temperaturfühler-Signal auswertet.

In einer besonders bevorzugten Ausführung der Erfindung ist der Temperaturfühler ein kostengünstiger und kompakter SMD-Temperatursensor, der auf einfache Weise auf der Sensorplatine anordenbar ist. Der SMD-Temperatursensor kann ferner eine integrierte Auswerteeinheit aufweisen.

Raumtemperaturregler weisen häufig mindestens eine Status-LED auf, die beispielweise den aktuellen Schaltzustand des Raumtemperaturreglers anzeigt. Vorzugsweise weist die Sensordom-Frontwand daher ein transluzentes und/oder transparentes LED-Fenster auf, und ist auf der Sensorplatine mindestens eine Status-LED angeordnet, die im aktivierten Zustand von außerhalb des Raumtemperaturreglers durch das LED-Fenster erkennbar ist. Für die Status-LED muss somit keine zusätzliche LED-Öffnung in der Abdeckblende vorgesehen sein. Ferner ist die Satus-LED auf einfache Weise auf der Sensorplatine anordenbar.

Da die Abdeckblende auf der sichtbaren Vorderseite eine Sensordom-Öffnung aufweist, in die der Sensordom im montierten Zustand eintaucht, trägt der Sensordom entscheidend zum optischen Gesamteindruck des erfindungsgemäßen Raumtemperaturreglers bei. In der Gebäudetechnik spielt die Ästhetik eine entscheidende Rolle. Aus diesem Grund, werden Gebäudetechnik-Funktionsmodule, wie der Raumtemperaturregler, häufig mit verschiedenfarbigen Abdeckblenden angeboten. In einer bevorzugten Ausführung der Erfindung ist mindestens die Sensordom-Frontwand farblos und matt und somit unabhängig von der Farbe der Abdeckblende optisch relativ unauffällig.

Da die Ästhetik in der Gebäudetechnik eine entscheidende Rolle spielt, bieten Gebäudetechnik-Hersteller häufig verschiedene Design-Programme, sogenannte "Schalterprogramme", mit einem einheitlichen Design für verschiedene Funktionsmodule an. Insbesondere weisen derartige Design-Programme im Allgemeinen einen einheitlichen und standardisierten Abdeckblenden-Rahmen auf, in den die unterschiedlichen Funktionsmodule, wie beispielsweise der Raumtemperaturregler, integrierbar sind. Vorzugweise ist die Abdeckblende des erfindungsgemäßen Raumtemperaturreglers daher in einem derartigen standardisierten Abdeckblenden-Rahmen anordenbar, sodass der Raumtemperaturregler auf einfache Weise in die Design-Linie eines Herstellers integrierbar ist.

Besonders bevorzugt schließt hierbei eine Abdeckblenden-Vorderseite im montierten Zustand im Wesentlichen bündig mit einer Rahmen-Vorderseite des Abdeckblenden-Rahmens ab, um einen flachen und optisch ansprechenden Raumtemperaturregler zu schaffen.

In einer bevorzugten Ausführung der Erfindung schließt eine Sensordom-Vorderseite im montierten Zustand im Wesentlichen bündig und stufenfrei mit der Abdeckblenden-Vorderseite ab, sodass der Sensordom optimal in das optische Gesamtbild des Raumtemperaturreglers einfügt. Insbesondere ragt der Sensordom nicht aus der Abdeckblende heraus und ist somit in der Seitenansicht des Raumtemperaturreglers nicht erkennbar.

Vorzugsweise ist das Bedienelement ein einfacher und kostengünstiger mechanischer Drehknopf.

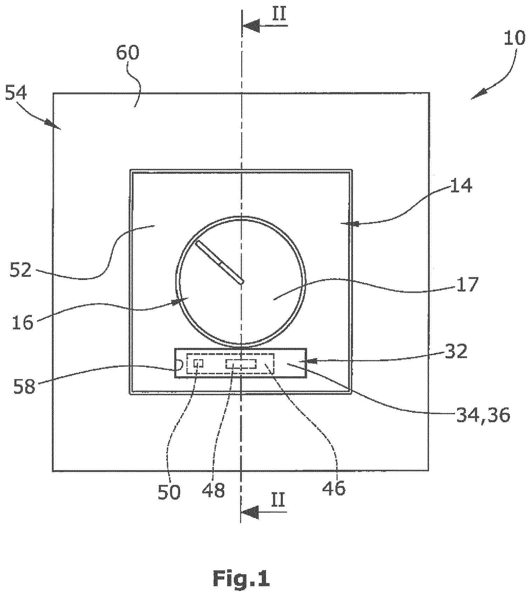

Ein Ausführungsbeispiel der Erfindung wird anhand der beigefügten Figuren beschrieben, wobei
Figur 1 eine Draufsicht auf eine Vorderseite eines erfindungsgemäßen Raumtemperaturreglers im montierten Zustand zeigt und

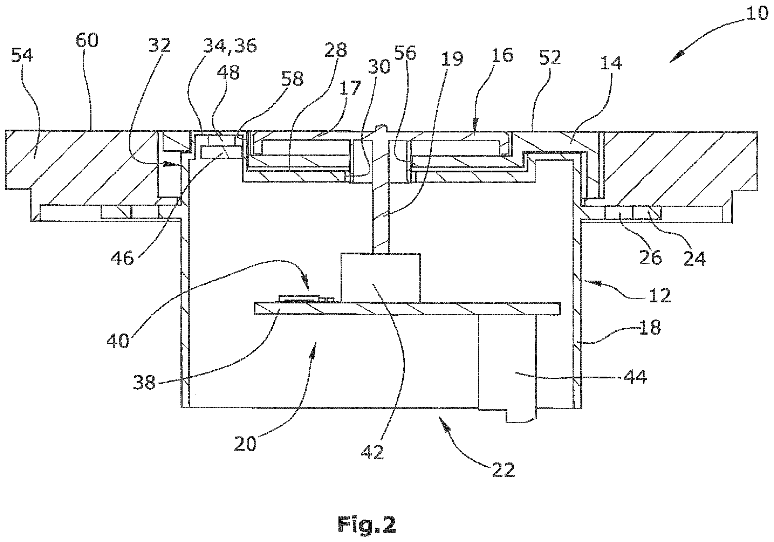

Figur 2 einen Schnitt entlang der Linie II-II des Raumtemperaturreglers aus Figur 1 zeigt.

Der gezeigte Raumtemperaturregler 10 ist für die Montage in einer nicht näher dargestellten standardisierten Gerätedose, insbesondere Unterputz-Gerätedose, geeignet. Der Raumtemperaturregler 10 umfasst eine Elektronikbaugruppe 12, eine Abdeckblende 14 und ein Bedienelement 16. Das Bedienelement 16 ist im vorliegenden Ausführungsbeispiel ein einfacher Drehknopf mit einer im Wesentlichen Teller-förmigen Drehscheibe 17 und einem dazu senkrecht stehenden Verbindungs-Stutzen 19. Die Elektronikbaugruppe 12, die Abdeckblende 14 und das Bedienelement 16 sind ohne die Verwendung von Werkzeug aneinander montierbar und voneinander demontierbar. Im vorliegenden Ausführungsbeispiel ist die Abdeckblende 14 im montierten Zustand nur über eine Schnappverbindung, die ohne die Verwendung eines Werkzeugs lösbar ist, an der Elektronikbaugruppe 12 befestigt und stütz selbst wiederum einen standardisierten Abdeckblenden-Rahmen 54.

Die Elektronikbaugruppe 12 umfasst ein Elektronik-Gehäuse 18 und eine Elektronikeinheit 20, die innerhalb des Elektronik-Gehäuses 18 angeordnet ist. Das Elektronik-Gehäuse 18 besteht aus einem elektrisch isolierenden Kunststoff und ist im Wesentlichen Topf-förmig ausgebildet. Das Elektronik-Gehäuse 18 ist auf einer Gehäuse-Rückseite 22 offen, wobei die Gehäuse-Rückseite 22 im montierten Zustand in der Gerätedose angeordnet ist. Auf einer Außenseite des Elektronik-Gehäuses 18 ist ein das Elektronik-Gehäuse 18 lateral umschließender Befestigungsflansch 24 ausgebildet, der mehre Schrauben-Öffnungen 26 aufweist. Bei der Montage wird die Elektronikbaugruppe 12 bis zur Anlage des Befestigungsflanschs 24 in die Gerätedose eingeschoben und anschließend über eine Schraubverbindung an der Gerätedose befestigt. Das Elektronik-Gehäuse 18 weist auf einer Gehäuse-Vorderseite 28 eine zentrale erste Bedienelement-Öffnung 30 auf, durch die im montierten Zustand der Verbindungs-Stutzen 19 des Bedienelements 16 hindurchragt. Ferner weist das Elektronik-Gehäuse 18 auf der Gehäuse-Vorderseite 28 einen domartig hervorstehenden Sensordom 32 auf. Der Sensordom 32 besteht aus einem Kunststoff und ist im vorliegenden Ausführungsbeispiel einstückig mit dem Elektronik-Gehäuse 18 ausgebildet. Der Sensordom 32 weist eine transluzente und/oder transparente Sensordom-Frontwand 34 auf, die ein LED-Fenster 36 bildet. Ferner ist die Sensordom-Frontwand 34 farblos und matt ausgebildet.

Die Elektronikeinheit 20 umfasst eine Elektronik-Platine 38, auf der eine Steuerelektronik 40 mit einem Mikrocontroller und weiteren elektrischen Bauelementen angeordnet ist. Die Elektronikeinheit 20 umfasst ferner einen Drehregler 42, über den eine Soll-Raumtemperatur einstellbar ist, und eine Anschlussklemme 44, über die die Elektronikeinheit 20 an das Gebäude-Stromnetz anschließbar ist. Im montierten Zustand greift der Verbindungs-Stutzen 17 des Bedienelements 16 in den Drehregler 42 ein, sodass die SOLL-Temperatur von außen über das Bedienelement 16 einstellbar ist.

Innerhalb des Sensordoms 32 ist eine Sensorplatine 46 angeordnet, die elektrisch mit der Elektronik-Platine 38 verbunden ist. Auf der Sensorplatine 46 ist ein elektrischer Temperaturfühler 48 angeordnet, der elektrisch mit der Elektronikeinheit 20 verbunden ist, um eine Ist-Raumtemperatur zu erfassen. Im vorliegenden Ausführungsbeispiel ist der Temperaturfühler 48 ein SMD-Temperatursensor, der direkt an der Sensordom-Frontwand 34 anliegt und über eine Wärmeleitpaste zusätzlich thermisch mit der Sensordom-Frontwand 34 verbunden ist. Auf der Sensorplatine 46 ist ferner eine Status-LED 50 angeordnet, die elektrisch mit der Elektronikeinheit 20 verbunden ist und die einen Schaltzustand des Raumtemperaturreglers 10 darstellt. Hierbei ist die Status-LED 50 derart auf der Sensorplatine 46 positioniert, dass die Status-LED 50 im aktivierten Zustand durch das LED-Fenster 36, also durch die Sensordom-Frontwand 34, von außen erkennbar ist.

Die Abdeckblende 14 weist eine zu der Außenkontur des Elektronik-Gehäuses 18 korrespondierende Innenkontur auf, sodass die Abdeckblende 14 auf das Elektronik-Gehäuses 18 aufschiebbar ist. Die Abdeckblende 14 weist eine im Wesentlichen quadratische Abdeckblenden-Vorderseite 52 auf, die korrespondierend zu einem standardisierten Abdeckblenden-Rahmen 54 ausgebildet ist. Im montierten Zustand ist die Abdeckblende 14 in dem Abdeckblenden-Rahmen 54 angeordnet und stützt diesen. Die Abdeckblende 14 weist auf der Vorderseite 52 eine zentrale zweite Bedienelement-Öffnung 56 auf, die mit der ersten Bedienelement-Öffnung 30 des Elektronik-Gehäuses 18 korrespondiert und durch die im montierten Zustand der Verbindungs-Stutzen 19 des Bedienelements 16 hindurchragt.

Die Abdeckblende 14 weist auf der Vorderseite 52 eine zu dem Sensordom 32 korrespondierende Sensordom-Öffnung 58 auf, in die der Sensordom 32 im montierten Zustand eintaucht. Die Abdeckblende 14 und der Sensordom 32 sind im vorliegenden Ausführungsbeispiel derart ausgebildet, dass die Sensordom-Frontwand 34 im montierten Zustand im Wesentlichen flächenbündig und stufenfrei mit der Abdeckblenden-Vorderseite 52 abschließt. Ferner schließt die Abdeckblenden-Vorderseite 52 im montierten Zustand im Wesentlichen bündig mit einer Rahmen-Vorderseite 60 des Abdeckblenden-Rahmens 56 ab. Der erfindungsgemäße Raumtemperaturregler 10 ist somit sehr flach.

Dadurch, dass erfindungsgemäß die Sensordom-Frontwand 34, die thermisch mit dem Temperaturfühler 48 verbunden ist, unmittelbar von der Raumluft angeströmt wird, ermöglicht der Raumtemperaturregler 10 eine exakte und verzögerungsarme Erfassung der Raumtemperatur.

### Bezugszeichenliste

- 10: Raumtemperaturregler
- 12: Elektronikbaugruppe
- 14: Abdeckblende
- 16: Bedienelement
- 18: Elektronik-Gehäuse
- 20: Elektronikeinheit
- 22: Gehäuse-Rückseite
- 24: Befestigungsflansch
- 26: Schrauben-Öffnungen
- 28: Gehäuse-Vorderseite
- 30: Bedienelement-Öffnung
- 32: Sensordom
- 34: Sensordom-Frontwand
- 36: LED-Fenster
- 38: Elektronik-Platine
- 40: Steuerelektronik
- 42: Drehregler
- 44: Anschlussklemme
- 46: Sensorplatine
- 48: Temperaturfühler
- 50: Status-LED
- 52: Abdeckblenden-Vorderseite
- 54: Abdeckblenden-Rahmen
- 56: Bedienelement-Öffnung
- 58: Sensordom-Öffnung
- 60: Rahmen-Vorderseite

## Patentansprüche

1. Elektronischer Raumtemperaturregler (10) zur Montage in einer standardisierten wandseitigen Gerätedose, umfassend
- eine Elektronikbaugruppe (12), die in der Gerätedose anordenbar und in der Gerätedose befestigbar ist, mit
∘ einem Elektronik-Gehäuse (18), das aus Kunststoff besteht, und
∘ einer Elektronikeinheit (20), die in dem Elektronik-Gehäuse (18) angeordnet ist,
- eine Abdeckblende (14), die an der Elektronikbaugruppe (12) befestigbar und von der Elektronikbaugruppe (12) abnehmbar ist,
- ein Bedienelement (16), das an der Abdeckblende (14) angeordnet ist und mit der Elektronikeinheit (20) wirkverbunden ist, und
- einen elektrischen Temperaturfühler (48), der elektrisch mit der Elektronikeinheit (20) verbunden ist,
wobei die Elektronikbaugruppe (12) einen domartig von der Vorderseite (28) des Elektronik-Gehäuses (18) hervorstehenden Sensordom (32) aufweist, der aus einem Kunststoff besteht und in dem der Temperaturfühler (48) angeordnet ist,
wobei die Abdeckblende (14) eine zu dem Sensordom (32) korrespondierende Sensordom-Öffnung (58) aufweist, in die der Sensordom (32) im montierten Zustand des Raumtemperaturreglers (10) eintaucht, und
wobei der Temperaturfühler (48) thermisch mit einer Sensordom-Frontwand (34) verbunden ist
**dadurch gekennzeichnet, dass**
in dem Sensordom (32) eine Sensorplatine (46) angeordnet ist, auf der der Temperaturfühler (48) angeordnet ist.

2. Elektronischer Raumtemperaturregler (10) nach Anspruch 1, wobei der Temperaturfühler (48) ein SMD-Temperatursensor ist.

3. Elektronischer Raumtemperaturregler (10) nach Anspruch 1 oder 2, wobei die Sensordom-Frontwand (34) ein transluzentes und/oder transparentes LED-Fenster (36) aufweist und
wobei auf der Sensorplatine (46) mindestens eine Status-LED (50) angeordnet ist, die im aktivierten Zustand von außerhalb des Raumtemperaturreglers (10) durch das LED-Fenster (36) erkennbar ist.

4. Elektronischer Raumtemperaturregler (10) nach einem der vorhergehenden Ansprüche, wobei mindestens die Sensordom-Frontwand (34) farblos und matt ist.

5. Elektronischer Raumtemperaturregler (10) nach einem der vorhergehenden Ansprüche, wobei die Abdeckblende (14) in einem separaten standardisierten Abdeckblenden-Rahmen (54) anordenbar ist.

6. Elektronischer Raumtemperaturregler (10) nach Anspruch 5, wobei eine Abdeckblenden-Vorderseite (52) im montierten Zustand im Wesentlichen bündig mit einer Rahmen-Vorderseite (60) des Abdeckblenden-Rahmens (54) abschließt.

7. Elektronischer Raumtemperaturregler (10) nach einem der vorhergehenden Ansprüche, wobei eine Sensordom-Vorderseite (34) im montierten Zustand im Wesentlichen bündig mit der Abdeckblenden-Vorderseite (52) abschließt.

8. Elektronischer Raumtemperaturregler (10) nach einem der vorhergehenden Ansprüche, wobei das Bedienelement (16) ein mechanischer Drehknopf ist.

## Claims

1. Electronic room temperature controller (10) to be mounted in a standardized wall-mounted device box, comprising
- an electronic assembly (12) which can be arranged in the device box and which can be fastened in the device box, with
• an electronics housing (18) which is made of plastic, and
• an electronics unit (20) which is arranged within the electronics housing (18),
- a cover panel (14) which can be attached to the electronics assembly (12) and which can be removed from the electronics assembly (12),
- a control element (16) which is arranged on the cover panel (14) and which is operatively connected to the electronics unit (20), and
- an electrical temperature sensor (48) which is electrically connected to the electronics unit (20),
wherein the electronics assembly (12) comprises a sensor dome (32) which protrudes from the front side (28) of the electronics housing (18) in a dome-like manner, which is made of a plastic and within which the temperature sensor (48) is arranged,
wherein the cover panel (14) comprises a sensor dome opening (58) which corresponds to the sensor dome (32) and into which the sensor dome (32) is inserted in the assembled state of the room temperature controller (10), and
wherein the temperature sensor (48) is thermally connected to a sensor dome front wall (34)
**characterized in that**
a sensor circuit board (46), on which the temperature sensor (48) is arranged, is arranged within the sensor dome (32).

2. Electronic room temperature controller (10) according to claim 1, wherein the temperature sensor (48) is an SMD temperature sensor.

3. Electronic room temperature controller (10) according to claim 1 or 2, wherein the sensor dome front wall (34) comprises a translucent and/or transparent LED window (36), and
wherein at least one status LED (50), which in the activated state is visible from outside the room temperature controller (10) through the LED window (36), is arranged on the sensor circuit board (46).

4. Electronic room temperature controller (10) according to one of the preceding claims, wherein at least the sensor dome front wall (34) is colorless and mat.

5. Electronic room temperature controller (10) according to one of the preceding claims, wherein the cover panel (14) can be arranged within a separate standardized cover panel frame (54).

6. Electronic room temperature controller (10) of claim 5, wherein a cover panel front side (52) is substantially flush with a frame front side (60) of the cover panel frame (54) in the assembled state.

7. Electronic room temperature controller (10) according to one of the preceding claims, wherein a sensor dome front side (34) is substantially flush with the cover panel front side (52) in the assembled state.

8. Electronic room temperature controller (10) according to one of the preceding claims, wherein the control element (16) is a mechanical rotary knob.

## Revendications

1. Régulateur électronique de température intérieure (10) destiné à être monté dans un boîtier d'appareillage mural standardisé, comprenant
- un ensemble électronique (12) qui peut être disposé dans le boîtier d'appareillage et fixé dans le boîtier d'appareillage, avec
o un boîtier électronique (18) qui est en matière plastique, et
o une unité électronique (20), qui est disposée dans le boîtier électronique (18),
- un panneau de recouvrement (14) qui peut être fixé à l'ensemble électronique (12) et qui peut être retiré de l'ensemble électronique (12),
- un élément de commande (16) qui est disposé sur le panneau de recouvrement (14) et qui est en liaison fonctionnelle avec l'unité électronique (20), et
- un capteur électrique de température (48), qui est relié électriquement avec l'unité électronique (20),
l'ensemble électronique (12) comprenant un dôme de capteur (32) faisant saillie à la manière d'un dôme depuis la face avant (28) du boîtier électronique (18), lequel dôme est constitué d'une matière plastique et dans lequel est disposé le capteur de température (48), le panneau de recouvrement (14) comprenant une ouverture de dôme de capteur (58) correspondant au dôme de capteur (32), dans laquelle le dôme de capteur (32) plonge à l'état monté du régulateur de température ambiante (10) et
le capteur de température (48) étant relié thermiquement avec une paroi frontale de dôme de capteur (34).
**caractérisé en ce que**
une platine de capteur (46) est disposée dans le dôme de capteur (32), sur laquelle est disposée la capteur de température (48).

2. Régulateur électronique de température intérieure (10) selon la revendication 1, dans lequel le capteur de température (48) est un capteur de température SMD.

3. Régulateur électronique de température intérieure (10) selon la revendication 1 ou 2, dans lequel la paroi frontale du dôme de capteur (34) comprend une fenêtre LED (36) translucide et/ou transparente, et
au moins une LED de statut (50) étant disposée sur la platine de capteur (46), laquelle, à l'état activé, est visible de l'extérieur du régulateur de température intérieure (10) à travers la fenêtre LED (36).

4. Régulateur électronique de température intérieure (10) selon l'une des revendications précédentes, dans lequel au moins la paroi frontale de dôme de détection (34) est incolore et mate.

5. Régulateur électronique de température intérieure (10) selon l'une des revendications précédentes, dans lequel le panneau de recouvrement (14) peut être disposé dans un cadre de panneau de recouvrement (54) standardisé séparé.

6. Régulateur électronique de température intérieure (10) selon la revendication 5, dans lequel une face avant de panneau de recouvrement (52) se termine, à l'état monté, substantiellement à fleur avec une face avant de cadre (60) du cadre de panneau de recouvrement (54).

7. Régulateur électronique de température intérieure (10) selon l'une des revendications précédentes, dans lequel une face avant de dôme de détection (34) se termine, à l'état monté, substantiellement en alignement avec la face avant de panneau de recouvrement (52).

8. Régulateur électronique de température intérieure (10) selon l'une des revendications précédentes, dans lequel l'élément de commande (16) est un bouton rotatif mécanique.
